# EUROPÄISCHE PATENTANMELDUNG

(11) **EP 2 183 958 A1**
(43) Veröffentlichungstag der Anmeldung: **12.05.2010**
(21) Anmeldenummer: 08450177.4
(22) Anmeldetag: 11.11.2008
(51) Int. Cl.: A01G 3/06, B26B 19/06

(54) **Schneidgerät**

(71) Anmelder: Payer International Technologies GmbH & Co. KG, 8151 St. Bartholomä (AT)
(72) Erfinder: Hendler, René, 8020 Graz (AT)
(74) Vertreter: Haffner und Keschmann Patentanwälte OG

(57) **Zusammenfassung**

Bei einem Schneidgerät mit einem relativ zu einem starren Messer (1) beweglichen und insbesondere schwenkbaren Messer (8), welches verschieb- oder schwenkbar am starren Messer (1) angelenkt ist, wobei das bewegliche bzw. schwenkbare Messer (8) über einen Exzenterbolzen (13) und einen Motor (14) zur Verschiebe- oder Schwenkbewegung antreibbar ist, weist das bewegliche bzw. schwenkbare Messer (8) an seinem den Schneiden (9) abgewandten Ende einen an zur Längsachse des Messers (8) schräg verlaufende Einlaufkanten anschließenden offenen Schlitz (11) für die Aufnahme des Exzenterbolzens (13) auf und ist kürzer ausgebildet als das starre Messer (1). Das starre Messer (1) weist in dem die axiale Länge des schwenkbaren Messers (8) übersteigenden Bereich Verriegelungsglieder, insbesondere Rastausnehmungen (3), zur Verriegelung an einem Messerkopf auf.

## Beschreibung

Die Erfindung bezieht sich auf ein Schneidgerät mit einem relativ zu einem starren Messer beweglichen bzw. schwenkbaren Messer, welches verschieb- oder schwenkbar am starren Messer angelenkt ist, wobei das bewegliche bzw. schwenkbare Messer über einen Exzenterbolzen und einen Motor zur Verschiebe- oder Schwenkbewegung antreibbar ist.

Schneidgeräte der eingangs genannten Art sind beispielsweise als Rasenkantenschneidgeräte bzw. Grasschneidgeräte bekannt. Bei einer Anlenkung des schwenkbaren Messers um eine am starren Messer festgelegte Achse können entsprechend durch Hebelübersetzung auch größere Kräfte bei batterie- oder akkumulatorbetriebenen Geräten übertragen werden, sodass derartige Einrichtungen auch als Baum- oder Astscheren eingesetzt werden können. Bei entsprechend geringer Antriebsleistung unter hoher Batterielebensdauer sind naturgemäß auch Ausbildungen als Haarschneide- bzw. Barttrimmgeräte denkbar.

Bei den bekannten Schneidgeräten der eingangs genannten Art, und insbesondere bei Ast- oder Grasscheren, sind die Messer einem hohen Verschleiß unterworfen und bedürfen daher in regelmäßigen Abständen einer Wartung oder eines Tausches. Die bekannten Ausbildungen sehen hierbei vor, dass das relativ zum starren Messer schwenkbare Messer eine Ausnehmung in Form eines Langlochs trägt und dass der motorisch angetriebene Exzenterbolzen in Richtung der Bolzenachse federnd gelagert ist. Wenn bei einer derartigen bekannten Ausbildung das starre Messer entriegelt wird und gemeinsam mit dem schwenkbaren Messer herausgezogen wird, muss der Exzenterbolzen federnd ausweichen können, wofür es zumeist auch erforderlich ist, das in das Langloch eintauchende Ende des Bolzens mit einer balligen Oberflächen bzw. verrundet auszubilden. Eine derartige Ausbildung hat zur Folge, dass nach einem Eintauchen des Exzenterbolzens in die entsprechende Ausnehmung bzw. das Langloch nicht die ganze axiale Höhe der Ausnehmung für die Kraftübertragung zur Verfügung steht und dass weiters bei entsprechender Verrundung des vorderen Endes und aufgrund des Umstands, dass die axiale Verschiebbarkeit ja relativ leichtgängig sein soll, ein relativ hoher Verschleiß im Bereich der axialen Lagerung des Exzenterbolzens und im Bereich des Stirnendes des Exzenterbolzens beobachtet wird.

Die Erfindung zielt nun darauf ab, die Austauschbarkeit von Messern in Schneidgeräten der eingangs genannten Art dahingehend zu verbessern, dass eine federnde axiale Lagerung des Exzenterbolzens nicht mehr erforderlich ist und gleichzeitig auch eine möglichst große Flankenfläche im Bereich des Umfangs des Bolzens für die Kraftübertragung zur Verfügung steht. Zur Lösung dieser Aufgabe besteht die erfindungsgemäße Ausbildung im wesentlichen darin, dass das bewegliche bzw. schwenkbare Messer an seinem den Schneiden abgewandten Ende einen an zur Längsachse des Messers schräg verlaufende Kanten anschließenden offenen Schlitz für die Aufnahme des Exzenterbolzens aufweist und kürzer ausgebildet ist als das starre Messer und dass das starre Messer in dem die axiale Länge des schwenkbaren Messers übersteigenden Bereich Verriegelungsglieder, insbesondere Rastausnehmungen, zur Verriegelung an einem Messerkopf aufweist. Dadurch, dass anstelle eines üblichen Langlochs nunmehr ein Schlitz vorgesehen ist, an welchem schräg angeordnete Einlaufkanten anschließen, wird beim Aufschieben eines starren Messers der Exzenterbolzen nicht mehr in Richtung seiner Achse beansprucht sondern über die schräg verlaufenden Kanten unmittelbar in den Schlitz eingeführt, sodass hier eine engere Toleranz gewählt werden kann und damit ein geringerer Verschleiß eintritt. Gleichzeitig wird durch den Verzicht auf eine axiale Verschiebbarkeit und federnde Lagerung des Exzenterbolzens die Möglichkeit geschaffen, den Schlitz in der Zone, in welcher die Übertragung der Kräfte vom Exzenterbolzen auf das schwenkbare Messer erfolgen soll, entsprechend auszubilden, dass die Kontaktfläche zwischen Exzenterbolzen und dem Rand des Schlitzes entsprechend hoch ist, was gleichfalls wiederum zu verringerter spezifischer Flächenlast und damit zu einer Verringerung des Verschleißes beiträgt.

Mit besonderem Vorteil ist die Ausbildung zu diesem Zweck so getroffen, dass das bewegliche bzw. schwenkbare Messer im Bereich des Schlitzes mit größerer Materialstärke ausgebildet ist als im die Schneiden tragenden Endbereich, wobei vorzugsweise der Rand des Schlitzes eine Materialanhäufung oder Aufdoppelung trägt.

Um eine möglichst leichte Einführung eines Reserve- oder Ersatzmessers zu ermöglichen ist mit Vorteil die Ausbildung so getroffen, dass die Einlaufkanten des Schlitzes einen Winkel von weniger als 45° mit der Längsachse des schwenkbaren Messers einschließen. Wie bereits eingangs genannt, kann das erfindungsgemäße Schneidgerät mit Vorteil als motorisch betriebene Baum-, Ast- oder Grasschere ausgebildet sein.

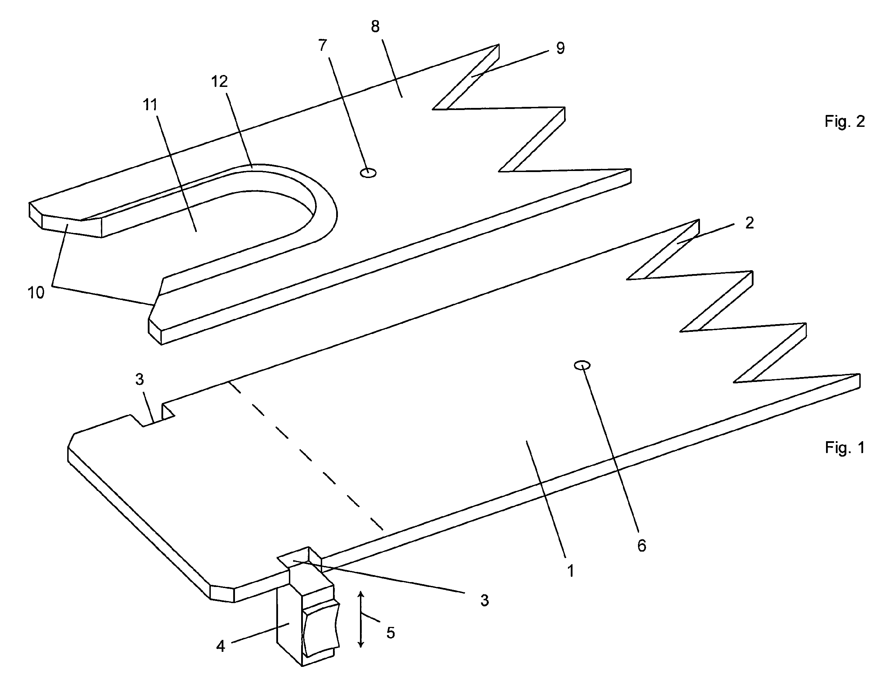

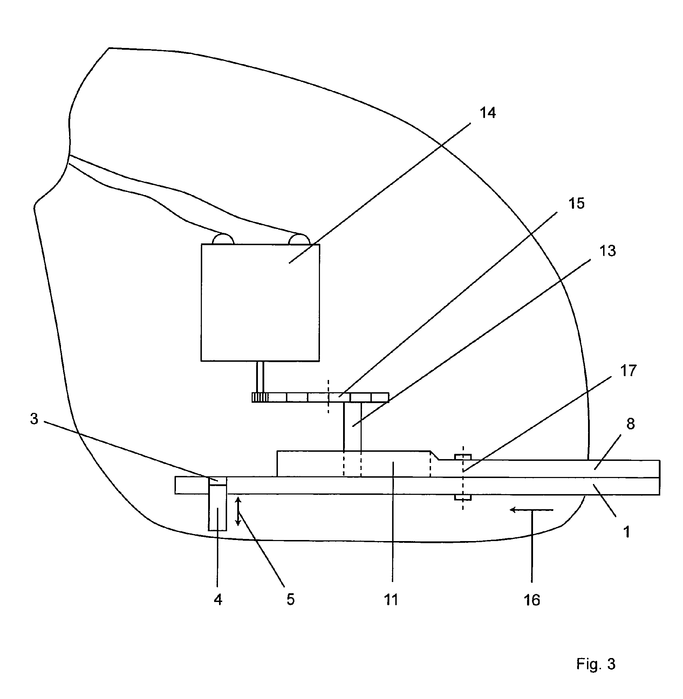

Die Erfindung wird nachfolgend anhand eines in der Zeichnung schematisch dargestellten Ausführungsbeispiels näher erläutert. In dieser zeigen Fig.1 eine perspektivische Ansicht eines starren Messers, Fig.2 eine perspektivische Ansicht des mit dem Messer nach Fig.1 durch eine Schwenkachse verbindbaren schwenkbaren Messers und Fig.3 eine schematische Ansicht eines Schneidkopfs, in welchen Messer nach Fig.1 und 2 eingeführt wurden.

In Fig.1 ist ein starres Messer 1 ersichtlich, dessen Schneiden mit 2 bezeichnet sind. Das starre Messer 1 trägt Ausnehmungen 3 für die Aufnahme eines verschieblichen Verriegelungsglieds 4, welches im Sinne des Doppelpfeils 5 verschiebbar ist, um in Eingriff oder außer Eingriff mit der Ausnehmung 3 zu gelangen. Eine entsprechende zentrale Bohrung 6 ist für die Aufnahme einer Verbindungsachse vorgesehen, welche im Zusammenbau mit der Bohrung 7 des Messers 8 gemäß Fig.2 fluchtet. Durch die Bohrungen 6 und 7 kann somit die gemeinsame Anlenkachse gesteckt werden, sodass das Messer 8 mit seinen Schneiden 9 um die Verbindungsachse relativ zum Messer 1 schwenkbar ist. Das Messer 8 ist nun in axialer Richtung kürzer ausgebildet und weist an seinen den Schneiden 9 abgewandten Enden Einlaufkanten 10 und einen Schlitz 11 auf. Der Rand 12 des Schlitzes 11 ist durch einen U-förmigen Bügel aufgedoppelt, sodass sich in Richtung quer zur Ebene des Messers 8 eine größere Angriffsfläche für einen Exzenterbolzen ergibt.

In der zusammengebauten Lage, wie sie in Fig.3 dargestellt ist, ist nun ersichtlich, wie ein Exzenterbolzen 13 in den Schlitz 11 eintaucht. Der Exzenterbolzen 13 ist hierbei an einem durch den Motor 14 angetriebenen Zahnrad 15 festgelegt. Mit 4 ist wiederum das Verriegelungsglied angedeutet, mittels welchem das Messer 1 nach dem Einführen in Richtung des Pfeils 16 verriegelbar ist. Die Schwenkachse des Messers 8 relativ zum Messer 1 ist mit 17 bezeichnet. Aus den Darstellungen nach Fig.2 und 3 ist ersichtlich, dass der Exzenterbolzen 13 über einen relativ hohen Anteil seiner axialen Länge unmittelbar kraftschlüssig am Rand des Schlitzes 11 des Messers 8 angreifen kann, sodass hier hohe Kräfte sicher übertragen werden können, wodurch sich die erfindungsgemäße Schneideinrichtung auch als Hecken-, Baum- oder Astschere eignet.

## Patentansprüche

1. Schneidgerät mit einem relativ zu einem starren Messer beweglichen und insbesondere schwenkbaren Messer, welches verschieb- oder schwenkbar am starren Messer angelenkt ist, wobei das bewegliche bzw. schwenkbare Messer über einen Exzenterbolzen und einen Motor zur Verschiebe- oder Schwenkbewegung antreibbar ist, **dadurch gekennzeichnet, dass** das bewegliche bzw. schwenkbare Messer (8) an seinem den Schneiden (9) abgewandten Ende einen an zur Längsachse des Messers (8) schräg verlaufende Einlaufkanten (10) anschließenden offenen Schlitz (11) für die Aufnahme des Exzenterbolzens (13) aufweist und kürzer ausgebildet ist als das starre Messer (1) und dass das starre Messer (1) in dem die axiale Länge des schwenkbaren Messers (8) übersteigenden Bereich Verriegelungsglieder, insbesondere Rastausnehmungen (3), zur Verriegelung an einem Messerkopf aufweist.

2. Schneidgerät nach Anspruch 1, **dadurch gekennzeichnet, dass** das bewegliche bzw. schwenkbare Messer (8) im Bereich des Schlitzes (11) mit größerer Materialstärke ausgebildet ist als im die Schneiden (9) tragenden Endbereich.

3. Schneidgerät nach Anspruch 1 oder 2, **dadurch gekennzeichnet, dass** der Rand (12) des Schlitzes (11) eine Materialanhäufung oder Aufdoppelung trägt.

4. Schneidgerät nach Anspruch 1, 2 oder 3, **dadurch gekennzeichnet, dass** die Einlaufkanten (10) des Schlitzes (11) einen Winkel von weniger als 45° mit der Längsachse des schwenkbaren Messers (8) einschließen.

5. Schneidgerät nach einem der Ansprüche 1 bis 4, **dadurch gekennzeichnet, dass** das Schneidgerät eine motorisch betriebene Baum-, Ast- oder Grasschere ist.
